# DEMANDE DE BREVET EUROPEEN

(11) **EP 0 536 072 A1**
(43) Date de publication de la demande: **07.04.1993**
(21) Numéro de dépôt: 92460028.1
(22) Date de dépôt: 01.10.1992
(51) Int. Cl.: G02B 6/38, G02B 6/255

(54) **Dispositif de raccordement de fibres optiques et procédé de préparation de celui-ci**

(30) Priorité: 04.10.1991 FR 9112232
(71) Demandeur: FRANCE TELECOM, F-75015 Paris (FR)
(72) Inventeur: Mehadji, Kada, F-22300 Lannion (FR); Mathern, André, F-22300 Lannion (FR)
(74) Mandataire: Martin, Jean-Jacques

(57) **Abrégé**

La présente invention concerne un dispositif de raccordement de fibres optiques du type comprenant une ferrule (10) possédant un canal capillaire (12) de section sensiblement complémentaire des fibres optiques (F) à raccorder et apte à recevoir les extrémités respectives de deux fibres optiques, caractérisé par le fait qu'il comprend en outre un corps (100) surmoulé sur la ferrule (10) et définissant deux cônes d'entrée (120, 130) centrés sur le canal capillaire (12) et qui débouchent respectivement sur les deux extrémités axiales du canal capillaire (12).

## Description

La présente invention concerne le domaine des dispositifs de raccordement de fibres optiques.

Plus précisément, la présente invention concerne un dispositif de raccordement pour fibres optiques du type comprenant une ferrule possédant un canal capillaire apte à recevoir les extrémités de fibres optiques à raccorder.

Différents dispositifs de raccordement comprenant une ferrule à capillaire ont déjà été proposés.

Le document FR-A-2657865 décrit par exemple un embout de raccordement de fibres optiques comprenant un canal capillaire ainsi qu'un cône d'entrée formé par usinage dans chaque embout. Pour raccorder deux fibres optiques, celles-ci sont placées dans des embouts respectifs précités, l'engagement des fibres dans ces embouts étant facilité par les cônes d'entrée. Puis, les fibres optiques sont immobilisées dans leurs embouts respectifs à l'aide d'une colle polymérisable, et les deux embouts sont assemblés et alignés dans un manchon complémentaire.

Des variantes d'embouts comprenant un canal capillaire et un cône d'entrée, aptes à recevoir chacune une fibre optique, sont décrites par exemple dans les documents WO-A-8701464 et JP-A-589116.

Ces dispositifs de raccordement connus de fibres optiques, qui comprennent deux ferrules associées respectivement à chaque fibre optique, ne donnent pas totalement satisfaction.

En particulier, l'alignement des deux ferrules dans un manchon complémentaire n'est pas toujours assez précis pour permettre un alignement satisfaisant des fibres et occasionne de ce fait des pertes non négligeables dans le couplage de l'énergie optique.

Le document US-A-3944328 décrit une autre variante de ferrule réalisée par moulage, par exemple en résine époxy, comprenant un canal capillaire muni à chacune de ses extrémités d'un cône d'entrée. Une seule et même ferrule peut alors recevoir les extrémités respectives de deux fibres optiques. Cette technique évite d'avoir à aligner ultérieurement deux ferrules recevant chacune une fibre.

Toutefois la technique décrite dans le document US-A-3944328 ne donne pas non plus totalement satisfaction. En effet, la réalisation de ferrule par moulage ne permet pas toujours d'obtenir un canal capillaire adéquat, c'est-à-dire un canal capillaire présentant une précision dimensionnelle suffisante pour obtenir un alignement satisfaisant des fibres.

Le document EP-A-0272112 concerne un connecteur pour fibres optiques qui comprend une ferrule et une enveloppe thermorétractable qui loge un matériau de scellement. Ce matériau de scellement est confiné sur la ferrule 2 lorsque l'enveloppe 8 est rétractée.Toutefois, ce système, dans lequel le matériau de confinement est resserré sur la ferrule par l'enveloppe thermorétractable, ne permet pas de définir des cônes d'entrée très précis pour les fibres optiques, c'est-à-dire des cônes d'entrée qui coïncident exactement avec le canal capillaire de la ferrule.

Le but principal de la présente invention est d'éliminer les inconvénients de la technique antérieure.

Ce but est atteint selon la présente invention, grâce à un dispositif de raccordement du type comprenant une ferrule possédant un canal capillaire de section sensiblement complémentaire des fibres optiques à raccorder et apte à recevoir les extrémités respectives de deux fibres optiques, caractérisé par le fait qu'il comprend en outre un corps surmoulé sur la ferrule et définissant deux cônes d'entrée centrés sur le canal capillaire et qui débouchent respectivement sur les deux extrémités axiales du canal capillaire.

Le dispositif de raccordement conforme à la présente invention permet un alignement optimum des fibres optiques du fait qu'il utilise une ferrule à capillaire précis et évite la nécessité d'alignement ultérieur de deux ferrules.

Selon une autre caractéristique avantageuse de la présente invention, le corps surmoulé comprend au moins une ouverture radiale qui débouche sur la ferrule en regard de la zone de raccordement des fibres optiques, et la ferrule est réalisée en un matériau optiquement transparent.

Selon une autre caractéristique avantageuse de la présente invention, le corps surmoulé sur la ferrule comprend des bossages sur ses extrémités axiales. Comme cela sera explicité par la suite, ces bossages évitent un écrasement des fibres à l'utilisation.

La présente invention concerne également un procédé de préparation du dispositif de raccordement précité.

Selon une caractéristique importante, ce procédé de préparation comprend les étapes consistant à :
- réaliser une ferrule possédant un canal capillaire de section sensiblement complémentaire des fibres optiques à raccorder et apte à recevoir les extrémités respectives de deux fibres optiques,
- placer la ferrule dans la cavité d'un moule, sur au moins un berceau en saillie dans cette cavité,
- déplacer deux aiguilles coniques, alignées sur l'axe du canal capillaire de la ferrule, à translation axiale, pour engager les pointes des aiguilles dans les extrémités de la ferrule,
- fermer le moule, et
- injecter de la matière thermoplastique dans la cavité du moule pour former le corps surmoulé sur la ferrule.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en coupe axiale longitudinale d'une ferrule à capillaire conforme à la présente invention,
- les figures 2, 3 et 4 représentent des vues en coupe axiale verticale d'un moule conforme à la présente invention à diverses étapes suces- sives du procédé de préparation du dispositif de raccordement conforme à la présente invention,
- la figure 5 représente une vue de dessus d'un dispositif de raccordement conforme à la présente invention,
- la figure 6 représente une vue en coupe axiale du même dispositif de raccordement, selon le plan de coupe référencé VI-VI sur la figure 8,
- la figure 7 représente une vue en section du même dispositif de raccordement selon le plan de coupe référencé VII-VII sur la figure 5,
- la figure 8 repésente une vue en bout du même dispositif de raccordement selon la vue référencée VIII sur la figure 5,
- la figure 9 représente une vue de dessus d'une variante de réalisation d'un dispositif de raccordement conforme à la présente invention,
- la figure 10 représente une vue en coupe axiale horizontale du dispositif de raccordement conforme à la variante de réalisation de la figure 9, et
- la figure 11 représente une demi-vue en coupe axiale longitudinale d'un dispositif de raccordement conforme à la présente invention équipé de fibres optiques.

Le dispositif de raccordement conforme à la présente invention comprend essentiellement une ferrule 10 à capillaire et un corps 100 surmoulé sur la ferrule 10.

La ferrule 10 est formée d'un manchon rectiligne 11 possédant un canal capillaire rectiligne 12 centré sur un axe 14. L'enveloppe externe de la ferrule 10 est de préférence cylindrique de révolution autour de l'axe 14. La section droite du canal capillaire 12 est sensiblement complémentaire de l'enveloppe des fibres nues à raccorder. C'est-à-dire que le diamètre du canal capillaire 12 est légèrement supérieur au diamètre des fibres nues à raccorder, pour pouvoir recevoir celles-ci, tout en étant très voisin du diamètre de ces fibres pour limiter le jeu de celles-ci dans la ferrule 10. Ainsi, lorsque les extrémités de deux fibres optiques à raccorder sont engagées dans la ferrule 10, on obtient un excellent alignement des fibres optiques à raccorder et par conséquent une très faible perte dans le couplage de l'énergie optique.

A titre d'exemple pour une fibre optique nue d'un diamètre de 125f..lm, on peut utiliser un canal capillaire 12 d'un diamètre de 126µm.

La ferrule 10 est de préférence réalisée par étirage de tubes en silice. La technique de réalisation de ferrule à capillaire par étirage de tubes de silice est connue en soi de l'homme de l'art et ne sera donc pas décrite en détail par la suite. A titre d'exemple, on pourra se référer utilement au document FR-A-2657865. On rappelle cependant que ces ferrules possèdent de très bonnes précisions dimensionnelles. En outre, ces ferrules à base de tubes de silice possèdent une bonne transparence optique ce qui permet, comme cela sera indiqué par la suite, de vérifier visuellement et facilement la mise en place des fibres, particulièrement le contact des extrémités de celles-ci.

De façon typique, mais non limitative, la ferrule 10 peut présenter un canal capillaire interne 12 d'un diamètre de 125f..lm, un diamètre externe de 1,2mm et une longueur de l'ordre de 10mm.

Si la réalisation des ferrules 10 en silice s'avère très préférentielle dans le cadre de la présente invention, cette dernière n'est toutefois pas limitée à l'utilisation de ce matériau particulier. Dans le cadre de la présente invention, les ferrules 10 peuvent également être réalisées à base de céramique ou d'alumine par exemple.

Le corps 100 surmoulé sur la ferrule 10 est réalisé de préférence en matériau thermoplastique. Il s'agit très avantageusement de polyphenylènesulfone, tel que le matériau commercialisé par la Société PHILIPPS PETROLEUM sous la dénomination commerciale RYTON. Ce matériau thermoplastique peut être chargé.

Le corps 100 entoure la ferrule 10 et se prolonge de façon. symétrique au-delà de chaque extrémité axiale de celle-ci. Le corps 100 est de ce fait un corps allongé centré sur l'axe 14 de la ferrule 10. Son enveloppe externe est généralement symétrique de révolution autour de cet axe 14.

Le corps 100 définit deux cônes d'entrée 120, 130, centrés sur l'axe 14 de la ferrule 10 et qui débouchent respectivement, dans le canal capillaire 12 de la ferrule 10, sur les deux extrémités axiales de celui- ci.

Les cônes d'entrée 120, 130 sont conçus pour former une jonction parfaite avec les extrémités du canal capillaire 12. Ils facilitent ainsi l'insertion des fibres optiques dans le capillaire 12.

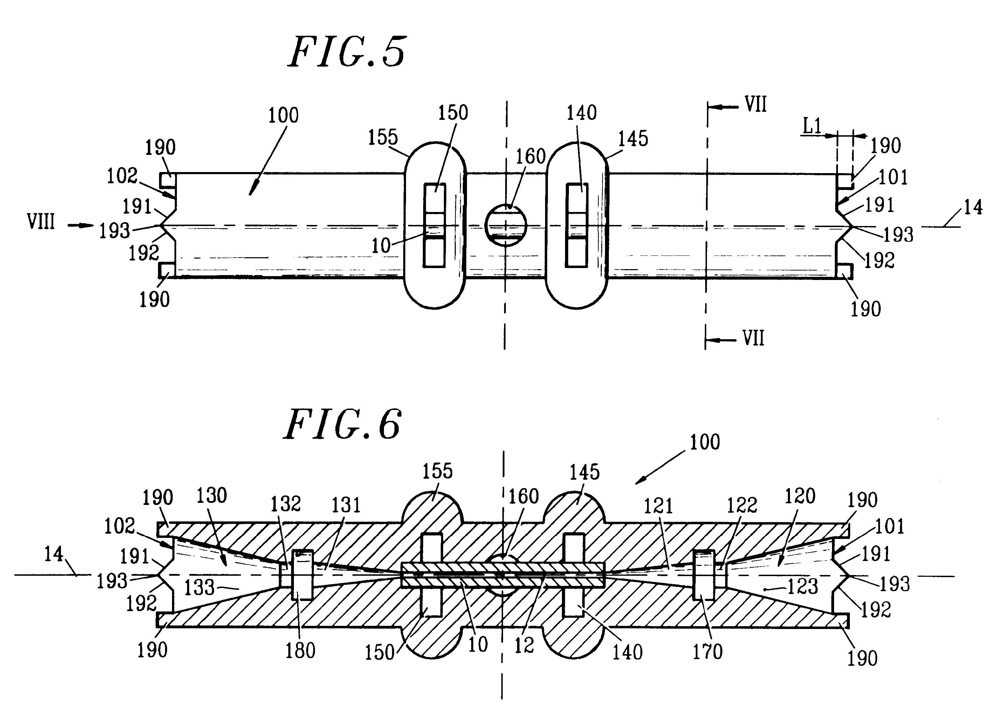

Selon le mode de réalisation préférentiel représenté sur les figures annexées, le dispositif de raccordement comprend au moins une ouverture 160 ménagée radialement dans le corps 100 et qui débouche sur la ferrule 10 en regard de la zone de raccordement des fibres optiques. Comme représenté sur les figures 5 et 6, l'ouverture 160 est de préférence ménagée à mi-longueur du corps 100. L'ouverture 160 permet d'examiner la zone de raccordement des fibres afin de contrôler la mise en contact des extrémités de celles-ci. De préférence l'ouverture 160 débouche diamétralement de part et d'autre du corps 100 pour permettre respectivement un éclairage de la zone de raccordement et une observation de celle-ci.

En outre, comme représenté sur les figures 5, 6 et 8, le corps 100 comprend de préférence, sur ses faces d'extrémité 101, 102 normales à l'axe 14, des bossages 190. Il est par exemple prévu quatre bossages 190 équi-répartis autour de l'axe 14. Les bossages 190 font saillie axialement sur les faces d'extrémité 101, 102, du corps 100. La longueur axiale L1 des bossages 190 est au moins égale au diamètre des fibres optiques gainées utilisées. Ainsi, les bossages 190 interdisent un écrasement des fibres optiques, même si le dispositif de raccordement est placé en appui par l'une de ses extrémités, comme représenté par exemple sur la figure 11.

La configuration des bossages 190 peut bien entendu faire l'objet de nombreux modes de réalisation.

De préférence, comme représenté sur les figures annexées, notamment sur les figures 5 et 6, chaque bossage 190 est délimité par deux. flancs plans 191, 192 symétriques d'un plan axial passant par l'axe 14 de la ferrule 10, et qui convergent en éloignement des faces d'extrémité 101, 102 du corps. Les flancs 191, 192 se rejoignent au niveau d'une génératrice rectiligne 193 orientée radialement par rapport à l'axe 14. Ces génératrices 193 forment les sommets des bossages 190.

Ainsi, lorsqu'il est prévu quatre bossages 190 équi-répartis autour de l'axe 14 de la ferrule, surcha- que extrémité du dispositif de raccordement, deux bossages 190 sont délimités chacun par deux flancs plans 191, 192 symétriques par rapport à un plan axial 194 passant par l'axe 14 de la ferrule 10, et les deux autres bossages 190 sont délimités de façon similaire, chacun, par deux flanc planss 191, 192 symétriques par rapport à un second plan axial 195 passant par l'axe 14 de la ferrule 10. Ce second plan de symétrie 195 est orthogonal au premier plan de symétrie 194 précité.

Les sommets 193 des différents bossages 190 prévus à une extrémité axiale du corps 100 sont coplanaires et situés dans un plan perpendiculaire à l'axe 14. De ce fait, lorsque le corps 100 est dressé sur l'une de ses extrémités axiales, il repose sur la surface d'appui par l'intermédiaire des génératrices 193 précitées, comme représenté sur la figure 11.

Les bossages 190 formés de deux flancs 191, 192 symétriques ont la forme de dents triangulaires en vue latérale comme cela apparaît à l'examen des figures 5 et 6.

On va maintenant décrire le procédé de préparation du dispositif de raccordement conforme à la présente invention en précisant à cette occasion la structure du dispositif.

La première étape du procédé consiste à réaliser la ferrule 10 munie du canal capillaire 12. Comme indiqué précédemment, la ferrule 10 peut être réalisée selon toute technique connue de l'homme de l'art, par exemple selon l'enseignement décrit dans le document FR-A-2657865.

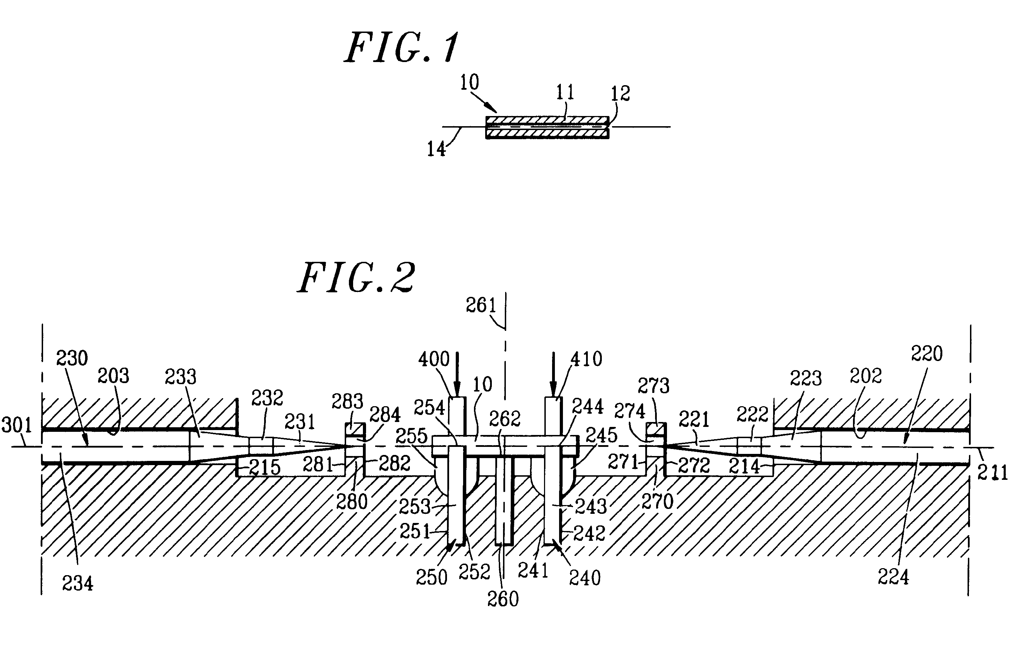

Comme représenté sur les figures 2 à 4, la ferrule 10 est ensuite placée dans un moule pour la formation du corps 100. Ce moule comprend une coquille inférieure fixe 200 et une coquille supérieure mobile 300. La coquille supérieure 300 est déplaçable à translation dans une direction T, perpendiculaire au plan de joint 301. Le plan de joint 301 est perpendiculaire au plan des figures 2 à 4, tandis que la direction de translation T est parallèle à celles-ci.

Plus précisément, la ferrule 10 est placée dans la coquille inférieure 200 du moule. Cette coquille 200 définit une cavité 210 complémentaire d'une moitié longitudinale de l'enveloppe du corps 100. Par exemple, pour un corps 100 généralement cylindrique de révolution autour de l'axe 14, la cavité 210 est une cavité hémicylindrique centrée sur un axe 211.

Cet axe 211 coïncide avec l'axe 14 de la ferrule 10, à l'utilisation. L'axe 211 est en outre placé dans le plan de joint 301.

Bien entendu, pour un corps 100 de section droite polygonale, la cavité 210 présente une section polygonale complémentaire.

Selon le mode de réalisation représenté suries figures 2 à 4, la ferrule 10 est placée en appui sur deux berceaux verticaux 240, 250 en saillie dans la cavité 210. Les deux berceaux 240, 250 sont situés à égale distance de la moitié de la longueur de la cavité 210. Les berceaux 240, 250 sont délimités par deux surfaces principales planes 241, 242, 251, 252 orthogonales à l'axe 14, deux flancs latéraux plans 243, 253, parallèles entre eux et orthogonaux au plan du joint 301 du moule, et une surface supérieure 244, 254 concave et complémentaire de l'enveloppe de la ferrule 10. Les surfaces 244, 254 sont avantageusement des surfaces cylindriques de révolution autour de l'axe 211 de la cavité 210, de sorte que cet axe 211 et l'axe 14 de la ferrule soient alignés lorsque la ferrule est placé sur les berceaux 240, 250.

La ferrule 10 est alors immobilisée sur les berceaux 240, 250 à l'aide de doigts 400, 410 abaissés sur la ferrule 10 et reposant sur celle-ci.

Le moule 200 est en outre équipé de deux aiguilles 220, 230 identiques centrées sur l'axe 211 du moule. Les aiguilles 220, 230 ont une forme générale tronconique effilée en direction du centre de la cavité 210. Les aiguilles 220, 230 sont placées dans des alésages 202, 203 formés dans la coquille 200 et centrés sur l'axe 211 de sorte que les aiguilles 220, 230 sont guidées à translation selon l'axe 211. La géométrie particulière de la pointe des aiguilles 220, 230 est adaptée à la forme des cônes d'entrée 120, 130 recherchée.

Selon le mode de réalisation représenté sur les figures annexées, chaque aiguille 220, 230, comprend successivement, de sa pointe vers sa base, une partie conique 221, 231, une partie cylindrique de révolution 222, 232, une partie tronconique 223, 233, et une partie cylindrique de révolution 224, 234.

Le diamètre de la partie cylindrique intermédiaire 222, 232 est égal au plus grand diamètre de la partie conique 221,231 et au plus petit diamètre de la partie tronconique 223, 233. La partie cylindrique de base 224, 234 a un diamètre égal au plus grand diamètre de la partie tronconique 223, 233.

Les aiguilles 220, 230 précitées configurent des cônes d'entrée 120, 130 qui comprennent successivement, du centre du corps 100 vers ses extrémités, une partie conique 121, 131, une partie cylindrique de révolution 122, 132 et une partie tronconique 123, 133.

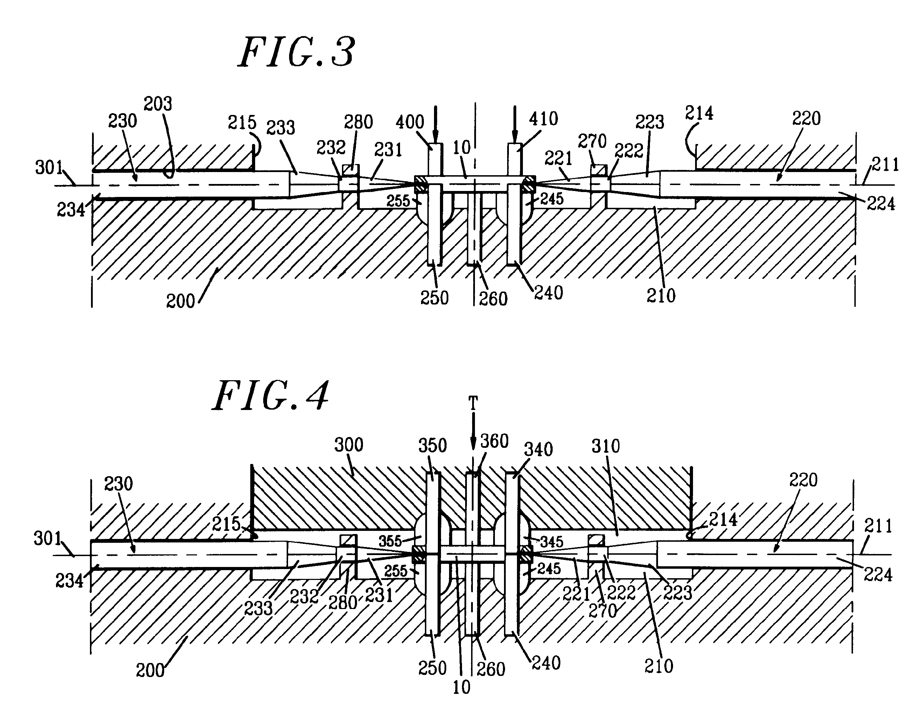

Comme cela apparaît à l'examen comparé des figures 2 et 3, après avoir placé la ferrule 10 en appui sur les berceaux 240, 250 et immobilisé la ferrule 10 à l'aide des doigts 400, 410, les aiguilles 220, 230 sont déplacées à translation, selon l'axe 211, en rapprochement, afin d'engager les pointes coniques 221, 231 dans les extrémités respectives du canal capillaire 12 de la ferrule 10 sur une distance contrôlée.

Plus précisément, il est prévu de préférence, deux murets 270, 280 respectivement entre les berceaux 240, 250 et les extrémités axiales 214, 215 correspondantes de la cavité 210.

Les murets 270, 280 font saillie dans la cavité 210. Les murets 270, 280 sont délimités essentiellement par deux faces principales 271, 272, 281, 282, planes et orthogonales à l'axe 211, deux flancs plans parallèles entre eux et à l'axe 211 et orthogonaux au plan de joint 301, et un sommet 273, 283, hémicylindrique convexe centré sur l'axe 211. L'écartement entre les flancs précités des murets 270, 280, est égal au diamètre des surfaces cylindriques 273, 283, et supérieur à la section cylindrique 222, 232 des aiguilles 220, 230, tout en étant inférieur à la section droite de la cavité 210. Ces murets 270, 280, forment des lumières 170, 180 dans les cônes d'entrée 120, 130 de la pièce 100. Ces lumières 170, 180 sont aptes à recevoir une masse de colle pour immobiliser les fibres optiques dans le dispositif de raccordement.

En d'autres termes, les murets 270, 280 délimitent dans le corps 100, sur la périphérie interne de chaque cône d'entrée 120, 130, une rainure qui débouche radialement sur l'extérieur du corps 100.

Les murets 270, 280 sont munis chacun d'un alésage traversant 274, 284 centré sur l'axe 211 et de section complémentaire des parties cylindriques 222, 232 des aiguilles 220, 230.

La coquille 200 inférieure du moule, comprend en outre, à mi-longueur, un fût central 260 en saillie perpendiculairement au plan de joint 301.

Le fût 260 présente par exemple une section circulaire centrée sur un axe 261 perpendiculaire au plan de joint 301 et de diamètre supérieur au diamètre de la ferrule 10. Le sommet du fût 260 est délimité par une calotte cylindrique 262 concave centrée sur l'axe 211. Cette calotte 262 est complémentaire de l'enveloppe de la ferrule 10. Ainsi, le fût 260 forme dans le corps 100, comme indiqué précédemment, une ouverture radiale 160 qui débouche sur la ferrule 10 en regard de la zone de raccordement des fibres et permet d'examiner celles-ci, lorsque la ferrule 10 est réalisée en matériau transparent.

Cette disposition est importante dans la mesure où l'écart entre les extrémités des fibres doit généralement être inférieur à 10wm pour ne pas pénaliser la connexion.

L'observation des extrémités des fibres peut être faite par tous moyens optiques simples connus de l'homme de l'art.

Après avoir retiré les doigts 400, 410, la coquille supérieure 300 du moule est placée sur la coquille inférieure 200 pour fermer la cavité de moulage.

La coquille supérieure 300 définit une cavité 310 symétrique de la cavité 210 de la coquille inférieure 200. De préférence, la cavité 310 de la coquille supérieure 300 est de ce fait hémi-cylindrique et comprend deux berceaux 340, 350 symétriques des berceaux 240, 250 et un fut 360 symétrique du fut 260. En revanche, de préférence, la coquille supérieure 300 du moule ne comprend pas de muret comparable aux murets 270, 280 précités.

Les berceaux 240, 250, 340, 350, qui portent la ferrule 10 définissent deux paires de fenêtres 140, 150 débouchant sur la ferrule, dans le corps 100. Lorsqu'il est prévu un fut 260 sur la coquille 200 et un fut 360 sur la coquille 300, on obtient également deux ouvertures 160 respectivement d'observation et d'éclairage, diamétralement opposées, dans le corps 100 comme indiqué précédemment. Si un seul fut 260 ou 360 est prévu dans le moule, on obtient une seule ouverture d'observation 160.

Pour permettre une tenue suffisante de la matière formant le corps 100 malgré la présence des berceaux 240, 250 et 340, 350, les cavités 210, 310 définies dans les coquilles de moulage 200, 300, présentent de préférence des épanouissements hémi- toriques 245, 255, 345, 355 autour des berceaux précités 240, 250, 340, 350. Ces épanouissements hémi- toriques 245, 255, 345, 355 dans les cavités de moulage 210, 310 conduisent à la réalisation de bourrelets 145, 155 sur l'extérieur du corps 100 comme cela est visible par exemple sur les figures 5 et 6.

Par ailleurs, la cavité de moulage définie par les coquilles 200 et 300 possède, à ses extrémités axiales 214, 215, des chambres complémentaires des bossages 190 recherchés en extrémité du corps 100. Ces chambres possèdent deux plans de symétrie qui coïncident aux plans de symétrie 194, 195 précités. L'un de ces plans de symétrie correspond au plan de joint 211. Le second plan de symétrie précité est orthogonal à ce plan de joint 301.

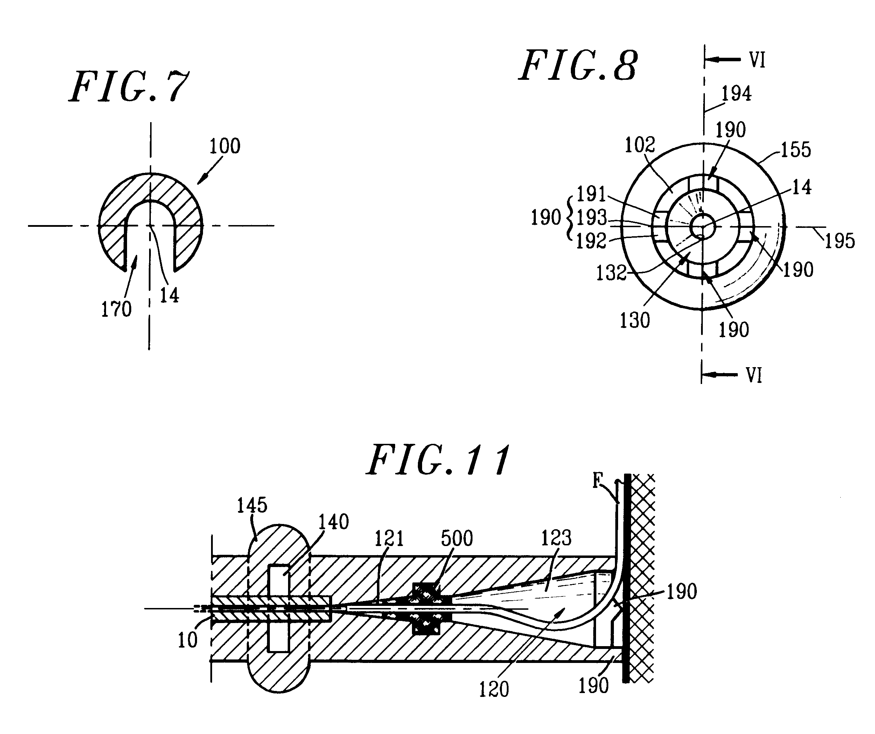

Pour connecter deux fibres optiques F à l'aide du dispositif de raccordement conforme à l'invention, il suffit d'engager les extrémités des fibres F dans les cônes d'entrée 120, 130 respectivement et de pousser les fibres optiques F dans le canal capillaire 12 pour placer en contact les extrémités de celles-ci. La mise en contact des fibres optiques F est contrôlée par les fenêtres 160. Les fibres optiques F peuvent alors être immobilisées dans le dispositif de raccordement à l'aide de colle 500 introduit par les lumières 170, 180 (voir figures 7 et 11).

Grâce aux dispositions précitées, on évite toute rupture des fibres F au niveau des extrémités du raccord. En effet, les dispositions précitées permettent aux fibres d'avoir un mouvement de liberté important sans qu'il y ait dommage. Comme représenté sur la figure 11, le dispositif de raccordement peut même être posé par l'une de ses extrémités sur une surface d'appui sans que la fibre correspondante F en souffre. En particulier, la fibre optique F ne peut jamais être écrasée en extrémité du dispositif de raccordement, grâce à la présence des bossages 190.

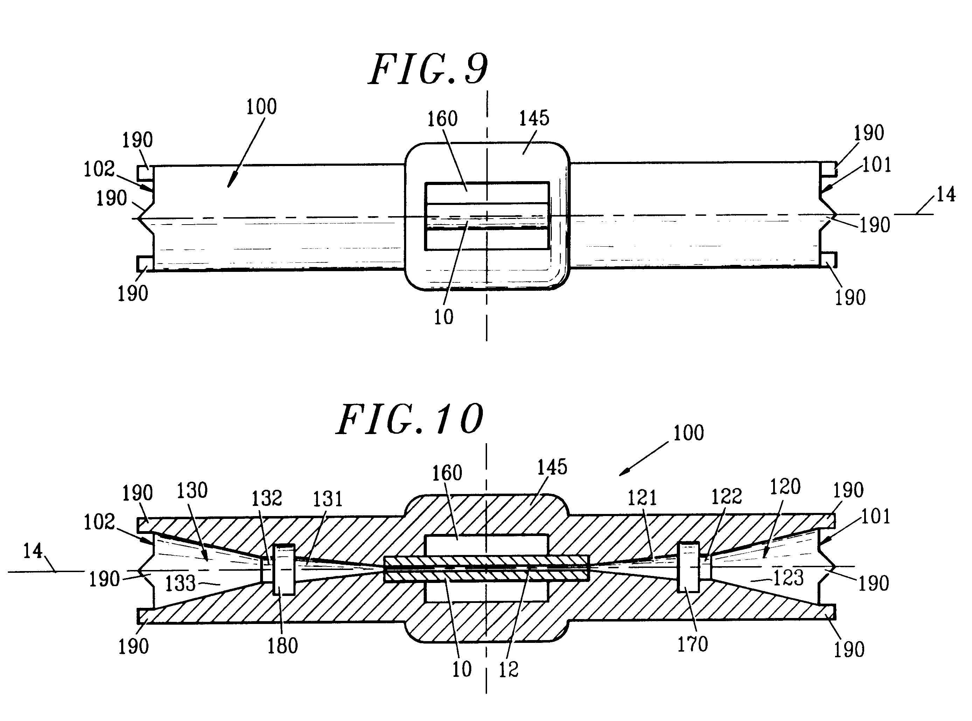

On a représenté sur les figures 9 et 10, qui correspondent respectivement aux figures 5 et 6 précitées, une variante de réalisation d'un dispositif de raccordement conforme à la présente invention, obtenu à l'aide d'un moule dans lequel les deux berceaux 240, 250 et le fût 260 précités sont réunis en un seul et même élément placé au centre de la cavité de moulage. Dans ce cas, le berceau unique central recevant la ferrule 10 au cours de l'opération de moulage est utilisé également pour former l'ouverture d'observation 160. En d'autres termes, les fenêtres 140, 150 et l'ouverture d'observation 160 sont alors réunies.

La présente invention trouve application au raccordement de fibres optiques monomodes ou multi- modes.

Selon un mode de réalisation particulier donné à titre d'exemple non limitatif :
- le diamètre extérieur du corps 100 est de 5mm,
- la longueur axiale L1 des bossages 190 est de l'ordre de 0,6mm,
- la longueur totale du corps 100 est de 34mm,
- le plus grand diamètre de la partie tronconique 123, 133 des cônes d'entrée 120, 130 est de 4mm,
- l'angle d'ouverture de la partie tronconique 123, 133 des cônes d'entrée 120, 130 est de 30°,
- le diamètre de la partie cylindrique 122, 132 des cônes d'entrée 120, 130 est de 1 mm,
- l'angle d'ouverture des parties coniques 121, 131 des cônes d'entrée 120, 130 est de 12°,
- la longueur axiale de la partie cylindrique 122, 132 des cônes d'entrée est de 1,5mm,
- le plus grand diamètre des bourrelets 145,155 est de 8mm.

La résine utilisée pour former le corps 100 possède des propriétés mécaniques proches des aciers. Le moulage du corps 100 est réalisé avantageusement sous pression.

Bien entendu la présente invention n'est pas limitée aux modes de réalisation particuliers qui viennent d'être décrits mais s'étend à toutes variantes conformes à son esprit.

## Revendications

1. Dispositif de raccordement de fibres optiques du type comprenant une ferrule (10) possédant un canal capillaire (12) de section sensiblement complémentaire des fibres optiques (F) à raccorder et apte à recevoir les extrémités respectives de deux fibres optiques, caractérisé par le fait qu'il comprend en outre un corps (100) surmoulé sur la ferrule (10) et définissant deux cônes d'entrée (120, 130) centrés sur le canal capillaire (12) et qui débouchent respectivement sur les deux extrémités axiales du canal capillaire (12).

2. Dispositif selon la revendication 1, caractérisé par le fait que le corps surmoulé (100) comprend au moins une ouverture radiale (160) qui débouche sur la ferrule (10) en regard de la zone de raccordement des fibres optiques (F), et la ferrule (10) est réalisée en un matériau optiquement transparent.

3. Dispositif selon la revendication 2, caractérisé par le fait que le corps surmoulé (100) comprend au moins deux ouvertures radiales (160) diamétralement opposées, qui débouchent sur la ferrule (10).

4. Dispositif selon l'une des revendications 1 à 3, caractérisé par le fait que le corps surmoulé (100) comprend des bossages (190) en saillie axialement sur ses extrémités axiales (101, 102).

5. Dispositif selon la revendication 4, caractérisé par le fait que le corps surmoulé (100) comprend quatre bossages (190) équi-répartis autour de l'axe (14) du corps.

6. Dispositif selon l'une des revendications 4 ou 5, caractérisé par le fait que la longueur axiale (L1) des bossages (190) est supérieure au diamètre des fibres gainées (F) utilisées.

7. Dispositif selon l'une des revendications 1 à 6, caractérisé par le fait que le corps surmoulé (100) possède deux lumières (170, 180) qui débouchent respectivement dans les cônes d'entrée (120,130).

8. Dispositif selon la revendication 7, caractérisé par le fait que les lumières (170, 180) reçoivent une masse de colle (500) pour immobiliser les fibres optiques (F).

9. Dispositif selon l'une des revendications 7 ou 8, caractérisé par le fait que les lumières (170, 180) forment une rainure sur la périphérie de chaque cône d'entrée (120, 130).

10. Dispositif selon l'une des revendications 1 à 9, caractérisé par le fait que le corps surmoulé est réalisé en matériau thermoplastique, de préférence du polyphenylènesulfone.

11. Dispositif selon l'une des revendications 1 à 10, caractérisé par le fait que la ferrule (10) est réalisée en silice.

12. Dispositif selon l'une des revendications 1 à 10, caractérisé par le fait que la ferrule (10) est réalisée en céramique ou alumine.

13. Procédé de préparation d'un dispositif conforme à l'une des revendications 1 à 12, caractérisé par le fait qu'il comprend les étapes consistant à : ,
- réaliser une ferrule (10) possédant un canal capillaire (12) de section sensiblement complémentaire des fibres optiques (F) à raccorder et apte à recevoir les extrémités respectives de deux fibres optiques,
- placer la ferrule (10) dans la cavité d'un moule (200, 300) sur au moins un berceau (240, 250) en saillie dans cette cavité,
- déplacer deux aiguilles coniques (220, 230) alignées sur l'axe (14) du canal capillaire (12) de la ferrule (10), à translation axiale, pour engager les pointes des aiguilles (220, 230) dans les extrémités de la ferrule (10),
- fermer le moule (200, 300),
- injecter de la matière thermoplastique dans la cavité du moule (200, 300) pour former le corps surmoulé (100) sur la ferrule (10).

14. Procédé selon la revendication 13, caractérisé par le fait que le moule (200, 300) possède deux berceaux (240, 250) et un fut (260) intercalé entre les berceaux (240, 250) et qui forme, dans le corps surmoulé (100), une ouverture d'observation (160) qui débouche sur la ferrule (10).

15. Procédé selon la revendication 13, caractérisé par le fait que le moule (200, 300) possède un berceau (240) qui forme, dans le corps surmoulé (100), une ouverture d'observation (160) qui débouche sur la ferrule (10).

16. Procédé selon l'une des revendications 13 à 15, caractérisé par le fait que le moule (200, 300) possède deux murets (270, 280) qui forment une lumière (170, 180) respectivement dans chaque cône d'entrée (120, 130).
